(19) Europäisches Patentamt
European Patent Office
Office européen des brevets

(11) **EP 3 401 867 A1**

(12) **EUROPEAN PATENT APPLICATION**
published in accordance with Art. 153(4) EPC

(43) Date of publication:
**14.11.2018 Bulletin 2018/46**

(21) Application number: **17735877.7**

(22) Date of filing: **09.01.2017**

(51) Int Cl.:
**G06Q 30/02** (2012.01)

(86) International application number:
**PCT/CN2017/070679**

(87) International publication number:
**WO 2017/118439 (13.07.2017 Gazette 2017/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.01.2016 CN 201610009656**

(71) Applicant: **Tencent Technology (Shenzhen) Company Limited**
**Shenzhen, Guangdong 518057 (CN)**

(72) Inventor: **YOU, Aihua**
**Shenzhen**
**Guangdong 518057 (CN)**

(74) Representative: **V.O.**
**P.O. Box 87930**
**Carnegieplein 5**
**2508 DH Den Haag (NL)**

(54) **INFORMATION PUBLISHING METHOD, INFORMATION PUBLISHING DEVICE AND STORAGE MEDIUM**

(57) The present invention provides an information release method, including obtaining a position-value table of reference information of different categories; obtaining multiple pieces of information-to-be-released, and performing normalization processing on a conversion rate of the information-to-be-released according to a category of the information-to-be-released by using a corresponding position-value table, to obtain a normalized conversion rate of the information-to-be-released; and selectively releasing the multiple pieces of information-to-be-released according to the normalized conversion rate of the information-to-be-released. The present invention further provides an information release apparatus and a computer storage medium.

FIG. 1

EP 3 401 867 A1

## Description

### RELATED APPLICATION

This application claims priority to Chinese Patent Application No. 201610009656.9, entitled "INFORMATION RELEASE METHOD AND INFORMATION RELEASE APPARATUS" filed on January 7, 2016, which is incorporated by reference in its entirety.

### FIELD OF THE TECHNOLOGY

The present invention relates to the field of information processing and, in particular, to an information release method, an information release apparatus, and a storage medium.

### BACKGROUND OF THE DISCLOSURE

With development in our society, people can now obtain a large variety of information by using various channels. For information of different categories, effects of user feedback may be different. For example, in a process of advertisement information push, an advertisement conversion rate of a download-type advertisement is approximately 10%, and an advertisement conversion rate of a following-type advertisement is approximately 20%. In this way, if an advertisement is selected, according to an advertisement conversion rate, for push, a large number of excellent download-type advertisements cannot compete with average following-type advertisements, thereby affecting accuracy of advertisement information release.

To resolve the foregoing problem, advertisement releaser performs normalization processing on all advertisements according to categories of the advertisements, so that advertisements of different categories have comparability. Existing normalization processing methods generally include linear function conversion, arccot function conversion, and standard fraction function conversion. However, errors in results obtained by using the foregoing normalization processing methods are all relatively large, affecting the accuracy of the advertisement information release.

### SUMMARY

Embodiments of the present invention provide an information release method and an information release apparatus to increase accuracy of advertisement information release.

The embodiments of the present invention provide an information release method. The method includes: obtaining position-value tables of reference information of different categories, wherein a position-value table comprises conversion rates of the reference information of a corresponding category at each position-value-point, wherein the position-value-point is generated according to exposure amount of all reference information of the category; obtaining multiple pieces of information-to-be-released, and performing normalization processing on conversion rates of the multiple pieces of information-to-be-released according to categories of the multiple pieces of information-to-be-released by using corresponding position-value tables, so as to obtain normalized conversion rates of the multiple pieces of information-to-be-released; and selectively releasing the multiple pieces of information-to-be-released according to the normalized conversion rates of the multiple pieces of information-to-be-released.

The embodiments of the present invention further provide an information release apparatus, including: a position value table obtaining module, configured to obtain position-value tables of reference information of different categories, wherein a position value table comprises conversion rates of the reference information of a corresponding category at each position-value-point, wherein the position-value-point is generated according to exposure amount of all reference information of the category; a normalization processing module, configured to: obtain multiple pieces of information-to-be-released, and perform normalization processing on conversion rates of the multiple pieces of information-to-be-released according to categories of the multiple pieces of information-to-be-released by using corresponding position-value tables, so as to obtain normalized conversion rates of the multiple pieces of information-to-be-released; and a release module, configured to selectively release the multiple pieces of information-to-be-released according to the normalized conversion rates of the multiple pieces of information-to-be-released.

The embodiments of the present invention further provide a computer storage medium, where the computer storage medium stores a computer executable instruction, and the computer executable instruction is used to execute the foregoing information release method.

Compared with an information release method and an information release apparatus in the traditional art, according to the information release method and the information release apparatus in the present invention, normalization processing is performed on information-to-be-released according to categories of the multiple pieces of information-to-be-released by using corresponding position-value tables, so that so as to increase accuracy and efficiency of information release, to resolve a technical problem that advertisement release accuracy in the existing information release method and information release apparatus.

### BRIEF DESCRIPTION OF THE DRAWINGS

FIG. 1 is a first schematic flowchart of an information release method according to an embodiment of the present invention;

FIG. 2 is a second schematic flowchart of an information release method according to an embodiment of the present invention;

FIG. 3 is a schematic flowchart of step S201 of an information release method according to an embodiment of the present invention;

FIG. 4 is a schematic flowchart of step S206 of an information release method according to an embodiment of the present invention;

FIG. 5 is a first schematic structural diagram of an information release apparatus according to an embodiment of the present invention;

FIG. 6 is a second schematic structural diagram of an information release apparatus according to an embodiment of the present invention;

FIG. 7 is a schematic structural diagram of a reference information parameter obtaining module of an information release apparatus according to an embodiment of the present invention;

FIG. 8 is a schematic structural diagram of a normalization processing module of an information release apparatus according to an embodiment of the present invention; and

FIG. 9 is a schematic structural diagram of a working environment of an electronic device in which an information release apparatus is located according to the present invention.

DESCRIPTION OF EMBODIMENTS

Referring to the figures, a same component symbol in the figures represents a same component, and the principle of the present invention is described by using examples in which the principle is implemented in a proper operation environment. The following descriptions are based on specific embodiments, and should not be regarded as a limitation on other specific embodiment that have not be described in detail herein in the present invention.

In the following descriptions, the specific embodiments of the present invention are described by referring to steps of work performed by one or more computers, unless otherwise clearly stated. Therefore, these steps and operations may be learned from the descriptions, where they are mentioned multiple times that the steps and operations are performed by a computer, including that the steps and operations are manipulated by a computer processing unit of an electronic signal that represents data in a structured pattern. The manipulation converts the data or maintains the data at a position in an internal memory system of the computer, and the manipulation may configure operation of the computer again or additionally change operation of the computer in a manner known very well by a person skilled in the art. A data structure maintained for the data is a physical position of the internal memory, and the data structure has a particular feature defined by the data. However, that the principle of the present invention is described by using the foregoing text does not represent a limitation, and the person skilled in the art may learn that the following steps and operations may alternatively be implemented in hardware.

The information release apparatus of the present invention may be implemented by using various electronic devices. The electronic devices include but are not limited to a personal computer, a server computer, a handheld or laptop device, a mobile device (such as a mobile phone, a personal digital assistant (PDA), or a media player), a multi-processor system, a consumption-type electronic device, a small computer, a large computer, a distributed computing environment that includes any of the foregoing systems or devices, and the like. However, the electronic devices are preferably information release servers, so as to effectively increase accuracy of advertisement release.

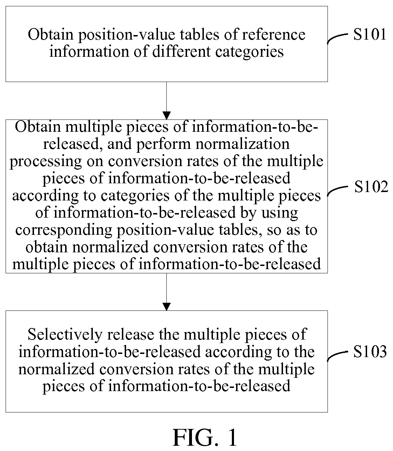

FIG. 1 is a flowchart of an embodiment of an information release method according to the present invention. The information release method in this embodiment may be implemented by using the foregoing electronic devices. Referring FIG. 1, the information release method may include the followings.

S101: Obtaining position-value tables of reference information of different categories.

S102: Obtaining multiple pieces of information-to-be-released and, based on the categories of the information-to-be-released, performing normalization processing on the conversion rate of the information-to-be-released using corresponding position-value tables, to obtain normalized a conversion rate of each piece of information-to-be-released.

S103: Selectively releasing the multiple pieces of information-to-be-released according to the normalized conversion rates of the multiple pieces of information-to-be-released.

The following describes specific flows of the information release method in this embodiment in detail. In S101, the information release apparatus obtains the position-value tables of the reference information of the different categories. The reference information herein may be advertisement information, promotion information, or the like. The reference information is divided into different categories because different feedback effects or feedback difficulties are required. For example, an advertisement that requires a user to click to view may be a viewing-type advertisement, an advertisement that requires a user to download an application is a download-type advertisement, and an advertisement that requires a user to click to follow may be a following-type advertisement. Different standards may be used to determine whether conversion rates of the reference information of the different categories are normal.

The position-value table includes a conversion rate that is of the reference information of a corresponding category and that is at each position-value-point, where the position-value-point is generated according to exposure amount of all reference information of the category. For example, all reference information of a category is sorted according to values of conversion rates, and then is divided into ten equal parts according to total exposure amounts of all the reference information, where the total exposure amounts are 0%, 10%, 20%, ..., 90%, and 100%. Then, ten exposure values obtained by setting the ten equal parts are used as values of position-value-points in the position-value table. A mapping relationship between position-value-points and conversion rates is directly set in the position-value table.

For example, two neighboring position-value-points can form an interval formed by position-value-points, and when exposure amount of a piece of reference information is located within the interval, a conversion rate of the reference information may be determined according to the interval of the exposure amount of the reference information and the foregoing mapping relationship by querying the position-value table. Certainly, a corresponding conversion rate function is set for each interval, the conversion rate of the reference information may be calculated by using a corresponding function relationship of the interval, and exposure amount of the reference information and/or a position-value-point of a corresponding interval. In this way, a normalized conversion rate is obtained. Then, step S102 is performed.

In S102, the information release apparatus obtains the multiple pieces of information-to-be-released, and then perform normalization processing on the conversion rate of the information-to-be-released according to the category of the obtained information-to-be-released by using the position-value table obtained in S101. That is, conversion rates of information-to-be-released of different categories are set by using the same standard, so as to obtain normalized conversion rates of the information-to-be-released of the different categories. Then, step S103 is performed.

In S103, the information release apparatus selectively releases the multiple pieces of information-to-be-released according to the normalized conversion rates of the information-to-be-released of the different categories obtained in S102. That is, under equal conditions, the piece of information-to-be-released whose normalized conversion rate is relatively high is first released, so as to increase accuracy of information release.

According to the information release method in this embodiment, the normalization processing is performed on information-to-be-released by using a position-value table of reference information of different categories, so that accuracy of advertisement information release can be increased.

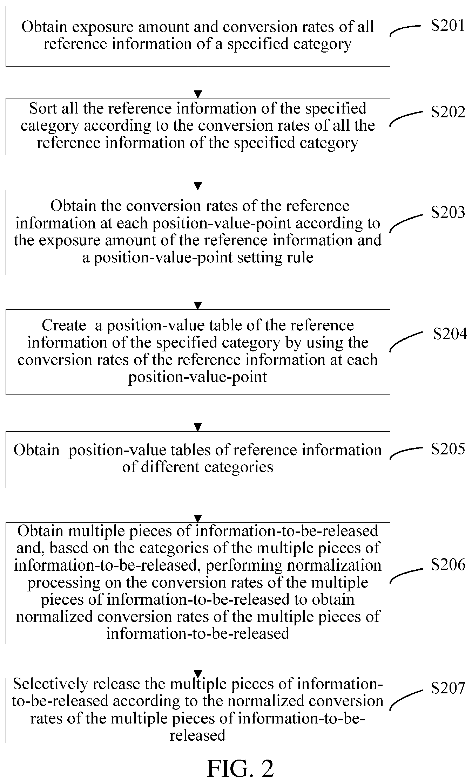

Referring to FIG. 2, FIG. 2 is a schematic flowchart of an information release method according to an embodiment of the present invention. The information release method in this embodiment may be implemented by using the foregoing electronic devices. The information release method may include the followings.

S201: Obtaining exposure amount and conversion rates of all reference information of a specified category.

S202: Sorting all the reference information according to the conversion rates of the reference information.

S203: Based on the exposure amount of the reference information and a position-value-point setting rule, obtaining the conversion rates of the reference information at each position-value-point.

S204: Creating a position-value table of the reference information of the specified category by using the conversion rates of the reference information at each position-value-point.

S205: Obtaining position-value tables of reference information of different categories.

S206: Obtaining multiple pieces of information-to-be-released and, based on the categories of the multiple pieces of information-to-be-released, performing normalization processing on the conversion rates of the multiple pieces of information-to-be-released to obtain normalized conversion rates of the multiple pieces of information-to-be-released.

S207: Selectively releasing the multiple pieces of information-to-be-released according to the normalized conversion rates of the multiple pieces of information-to-be-released.

The following describes specific flows of the information release method in this embodiment in detail.

In S201, the information release apparatus obtains the exposure amount and the conversion rates of all the reference information of the specified category. The exposure amount herein may be the number of times that the reference information is exposed and pushed, for example, the number of advertisement page views. The conversion rate may be a ratio of the number of preset feedback operations (such as click or download operations) of a user that are converted from exposed reference information to exposure amount of the reference information.

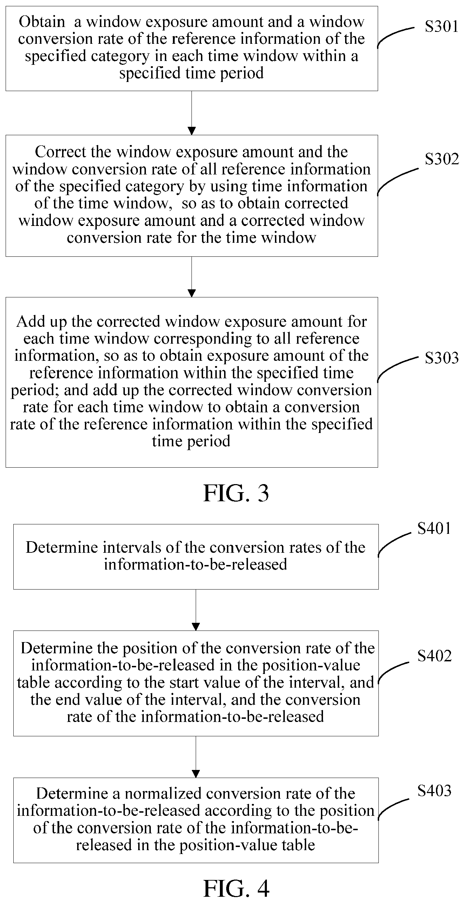

Specifically, refer to FIG. 3. FIG. 3 is a flowchart of S201 of an information release method according to the present invention. Step S201 includes:

S301: Obtaining a window exposure amount and a window conversion rate of the reference information of the specified category in each time window within a specified time period.

If ten (10) days are used as the specified time period, and the time window is measured in days, a window exposure amount and a window conversion rate of the reference information of the specified category for each day of the ten days are obtained, that is, ten window exposure amounts and ten window conversion rates are respectively obtained for each reference information.

S302: Correcting the window exposure amount and the window conversion rate of the reference information by using time information of the time window. The window conversion rate and the window exposure amount changes when the time duration increases, and the window conversion rate and window exposure amount at more recent time is more accurate. Thus, to accurately obtain the window exposure amount and the window conversion rate of the reference information, the window exposure amount and the window conversion rate of the reference information are corrected by using the time information of the time window, so as to obtain a corrected window exposure amount and a corrected window conversion rate of the time window corresponding to the reference information. The corrected window exposure amount is generally equal to a product of the window exposure amount and exposure amount correction weight. The exposure amount correction weight corresponding to a window exposure amount that is closer to the current time has a larger weight. The corrected window conversion rate is generally equal to a product of the window conversion rate and a conversion rate correction weight, and the correction weight corresponding to a window exposure amount that is closer to the current time has a larger weight.

S303: Adding up the corrected window exposure amount for the time windows corresponding to the reference information obtained in S302, so as to obtain exposure amount of the reference information within the specified time period; and, at the same time, adding up the corrected window conversion rates for the time windows corresponding to the reference information obtained in S302, so as to obtain the conversion rate of the reference information within the specified time period. Then, step S202 is performed.

In S202, the information release apparatus sorts all the reference information according to the conversion rates of the reference information obtained in S201, for example, sorts all the reference information according to the conversion rates of the reference information in ascending order; and then step S203 is performed.

In S203, the information release apparatus obtains the conversion rates of the reference information at each position-value-point according to the exposure amount of the reference information obtained in S201 and the position-value-point setting rule. Herein, the position-value-points are set among the conversion rates of all the reference information sorted according to the exposure amount. For example, a conversion rate of reference information at a location whose exposure amount is 0% of the total amount is used as a first position-value-point, a conversion rate of reference information at a location whose exposure amount is 10% of the total amount is used as a second position-value-point, ..., and a conversion rate of reference information at a location whose exposure amount is 100% of the total amount is used as an eleventh position-value-point. Any two neighboring position-value-points among the eleven position-value-points can form an interval, and each interval corresponds to one category of reference information, thereby dividing the conversion rates of all the reference information into ten categories and, at the same time, obtaining conversion rates of reference information from the first position-value-point to the eleventh position-value-point.

In S204, the information release apparatus creates a position-value table of the reference information of the specified category by using the conversion rates at each position-value-point obtained in S203. Then, step S205 is performed.

In S205, the information release apparatus obtains the position-value tables of the reference information of the different categories. The reference information herein may be advertisement information, promotion information, or the like. The reference information is divided into different categories because different feedback effects or feedback difficulties are required. For example, an advertisement that requires a user to click to view may be a viewing-type advertisement, an advertisement that requires a user to download an application is a download-type advertisement, and an advertisement that requires a user to click to follow may be a following-type advertisement. Different standards may be used to determine whether conversion rates of the reference information of the different categories are normal.

The position-value table includes conversion rates of the reference information of a corresponding category at each position-value-point, where the position-value-point is generated according to the exposure amount of all reference information of the category. For example, all reference information of a category is sorted according to values of conversion rates, and then is divided into ten equal parts according to total exposure amounts of all the reference information, where points whose total exposure amounts are 0%, 10%, 20%, ..., 90%, and 100% are position-value-points of the position-value table. Then, step S206 is performed

In S206, the information release apparatus obtains the multiple pieces of information-to-be-released, and performs normalization processing on the conversion rates of the multiple pieces of information-to-be-released according to the categories of the obtained information-to-be-released by using the position-value tables obtained in S205. That is, conversion rates of information-to-be-released of different categories are set by using a same standard, so as to obtain normalized conversion rates of the information-to-be-released of the different categories.

Specifically, refer to FIG. 4. FIG. 4 is a schematic flowchart of S206 of an information release method according to the present invention. S206 includes the followings.

S401: Determining intervals of the conversion rates of the information-to-be-released in the corresponding position-value table. Conversion rates of all the information-to-be-released in the position-value table are sorted by value and, at the position-value-points in the position-value table, the conversion rates of all the reference information are divided into multiple intervals according to exposure amounts of the reference information. For example, a first interval includes conversion rates of all reference information whose exposure amount occupies 0% to 10% of total exposure amount, a second interval includes conversion rates of all reference information whose exposure amount occupies 10% to 20% of the total exposure amount... In this way, an interval location of a conversion rate of information-to-be-released in the position-value table may be determined according to the position-value table. For example, a conversion rate of reference information within a first interval is 0.05 to 0.1, a conversion rate of reference information in a second interval is 0.1 to 0.13, and a conversion rate of reference information in a third interval is 0.13 to 0.2. If a conversion rate of information-to-be-released is 0.15, the conversion rate of the information-to-be-released is located within the third interval of the position-value table.

S402: Based on the start value of the interval obtained in S401, and the end value of the interval, and the conversion rate of the information-to-be-released, determining the position of the conversion rate of the information-to-be-released in the position-value table. If the conversion rate of information-to-be-released is located within the third interval of the position-value table, an interval start value of the interval is 0.13, and an interval end value of the interval is 0.2, and if a conversion rate of information-to-be-released is 0.15, the position of the conversion rate of the information-to-be-released in the position-value table is $A+(0.15-0.13)/(0.2-0.13)/B$, where A is a start position of the third interval in all intervals, and B is a total number of the intervals. If the position-value table is evenly divided into ten intervals, the value of A is 0.2, and the value of B is 10. In this way, the position of the conversion rate of the information-to-be-released in the position-value table is $0.2+(0.15-0.13)/(0.2-0.13)/10=0.228$.

S403: Determining a normalized conversion rate of the information-to-be-released according to the position of the conversion rate of the information-to-be-released in the position-value table, where the position is obtained in S402. If a maximum normalized conversion rate in a position-value table is 1, the normalized conversion rate of the information-to-be-released is 0.228. Then, step S207 is performed.

In S207, the information release apparatus selectively releases the multiple pieces of information-to-be-released according to the normalized conversion rates of the multiple pieces of information-to-be-released of the different categories obtained in S206. That is, under equal conditions, the information-to-be-released whose normalized conversion rate is relatively high is first released, so as to increase accuracy and efficiency of information release.

Based on the foregoing embodiments, according to the information release method in this embodiment, accuracy of advertisement information release is further increased by creating a position-value table and correction of the exposure amount and the conversion rate of reference information.

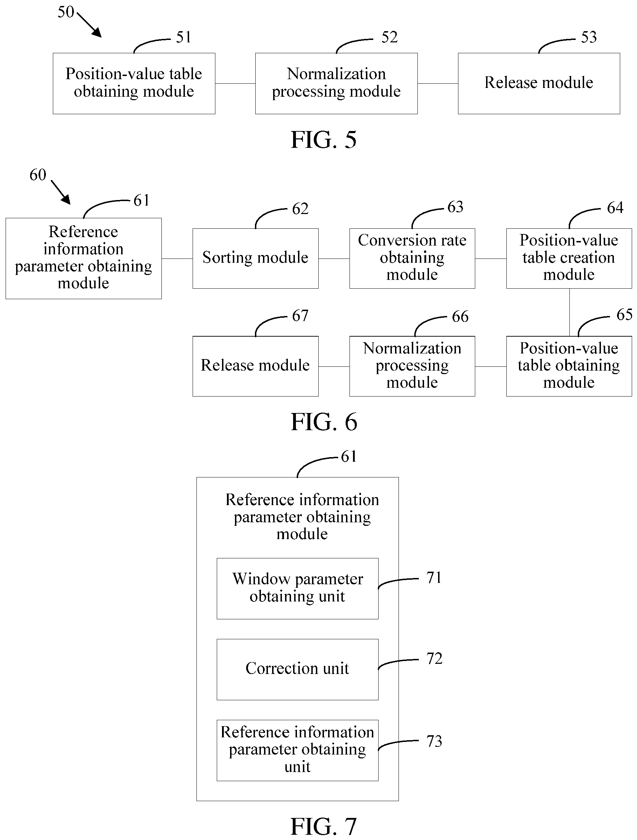

Referring to FIG. 5, FIG. 5 is a schematic structural diagram of an information release apparatus according to an embodiment of the present invention. The information release apparatus in this embodiment may implement the foregoing information release method. The information release apparatus 50 includes a position-value table obtaining module 51, a normalization processing module 52, and a release module 53, etc.

The position-value table obtaining module 51 is configured to obtain position-value tables of reference information of different categories, where the position-value table includes conversion rates of the reference information of a corresponding category at each position-value-point. The position-value-points are generated according to exposure amount of all reference information of the category. The normalization processing module 52 is configured to: obtain multiple pieces of information-to-be-released, and perform normalization processing on conversion rates of the multiple pieces of information-to-be-released according to categories of the multiple pieces of information-to-be-released by using corresponding position-value tables, so as to obtain normalized conversion rates of the multiple pieces of information-to-be-released. The release module 53 is configured to selectively release the multiple pieces of information-to-be-released according to the normalized conversion rates of the information-to-be-released.

During operation of the information release apparatus 50, in certain embodiment, the position-value table obtaining module 51 first obtains position-value tables of reference information of different categories. The reference information herein may be advertisement information, promotion information, or the like. The reference information is divided into different categories because different feedback effects or feedback difficulties are required. For example, an advertisement that requires a user to click to view may be a viewing-type advertisement, an advertisement that requires a user to download an application is a download-type advertisement, and an advertisement that requires a user to click to follow may be a following-type advertisement. Standards governing whether conversion rates of the reference information of the different categories are normal are different.

The position-value table includes conversion rates of the reference information of a corresponding category at each position-value-point, where the position-value-point is generated according to exposure amount of all reference information of the category. For example, all reference information of a category is sorted according to values of conversion rates, and then is divided into ten equal parts according to total exposure amounts of all the reference information, where points whose total exposure amounts are 0%, 10%, 20%, ..., 90%, and 100% are position-value-points of the position-value table.

Then, the normalization processing module 52 obtains the multiple pieces of information-to-be-released, and then performs normalization processing on the conversion rates of the multiple pieces of information-to-be-released according to the categories of the obtained multiple pieces of information-to-be-released by using the position-value tables obtained by the position-value table obtaining module 51, that is, conversion rates of information-to-be-released of different categories are set by using a same standard, so as to obtain normalized conversion rates of the information-to-be-released of the different categories.

Finally, the release module 53 selectively releases the multiple pieces of information-to-be-released according to the normalized conversion rates of the information-to-be-released of the different categories obtained by the normalization processing module 52. That is, under equal conditions, information-to-be-released whose normalized conversion rate is relatively high is first released, so as to increase information release accuracy.

In this way, an information release process of the information release apparatus 50 in this embodiment is complete. According to the information release apparatus in this embodiment, normalization processing is performed on information-to-be-released by using position-value tables of reference information of different categories, so that accuracy of advertisement information release can be increased.

Referring to FIG. 6, FIG. 6 is another schematic structural diagram of an information release apparatus according to an embodiment of the present invention. The information release apparatus in this embodiment may implement the foregoing information release method. The information release apparatus 60 includes a reference information parameter obtaining module 61, a sorting module 62, a conversion rate obtaining module 63, a position-value table creation module 64, a position-value table obtaining module 65, a normalization processing module 66, and a release module 67.

The reference information parameter obtaining module 61 is configured to obtain exposure amount and conversion rates of all reference information of a specified category. The sorting module 62 is configured to sort all the reference information according to the conversion rates of the reference information. The conversion rate obtaining module 63 is configured to obtain the conversion rates of the reference information at each position-value-point according to the exposure amount of the reference information and a position-value-point setting rule. The position-value table creation module 64 is configured to create a position-value table of the reference information of the specified category by using the conversion rates of the reference information at each position-value-point. The position-value table obtaining module 65 is configured to obtain position-value tables of reference information of different categories, where the position-value table includes conversion rates of the reference information of a corresponding category at each position-value-point, where the position-value-point is generated according to exposure amount of all reference information of the category. The normalization processing module 66 is configured to: obtain multiple pieces of information-to-be-released, and perform normalization processing on conversion rates of the information-to-be-released according to categories of the information-to-be-released by using corresponding position-value tables, to obtain normalized conversion rates of the information-to-be-released. The release module 67 is configured to selectively release the multiple pieces of information-to-be-released according to the normalized conversion rates of the information-to-be-released.

Referring to FIG. 7, FIG. 7 is a schematic structural diagram of a reference information parameter obtaining module of an information release apparatus according to an embodiment of the present invention. The reference information parameter obtaining module 61 includes a window parameter obtaining unit 71, a correction unit 72, and a reference information parameter obtaining unit 73.

The window parameter obtaining unit 71 is configured to obtain a window exposure amount and a window conversion rates of all reference information of the specified category in each time window within a specified time period. The correction unit 72 is configured to correct the window exposure amount and the window conversion rate of the reference information by using time information of the time window, to obtain a corrected window exposure amount and a corrected window conversion rate of the time window corresponding to the reference information. The reference information parameter obtaining unit 73 is configured to: add up the corrected window exposure amount for each time window corresponding to the reference information, to obtain exposure amount of the reference information within the specified time period; and add up the corrected window conversion rate for each time window corresponding to the reference information, to obtain a conversion rate of the reference information within the specified time period.

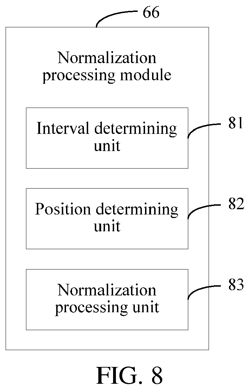

Referring to FIG. 8, FIG. 8 is a schematic structural diagram of a normalization processing module of an information release apparatus according to an embodiment of the present invention. The normalization processing module 66 includes an interval determining unit 81, a position determining unit 82, and a normalization processing unit 83.

The interval determining unit 81 is configured to determine an interval of the conversion rate of the information-to-be-released in the corresponding position-value table. The position determining unit 82 is configured to determine a position of the conversion rate of the information-to-be-released in the position-value table according to a start value of the interval, and an end value of the interval, and the conversion rate of the information-to-be-released. The normalization processing unit 83 is configured to determine the normalized conversion rate of the information-to-be-released according to the position of the conversion rate of the information-to-be-released in the position-value table.

During operation of the information release apparatus 60 in this embodiment, the reference information parameter obtaining module 61 first obtains exposure amount and a conversion rates of all reference information of a specified category. The exposure amount herein may be the number of times that the reference information is exposed and pushed, for example, the number of advertisement page views. The conversion rate may be a ratio of the number of preset feedback operations (such as click or download operations) of a user that are converted from exposed reference information to the exposure amount of the reference information.

Optionally, the window parameter obtaining unit 71 of the reference information parameter obtaining module 61 is configured to obtain a window exposure amount and a window conversion rate of reference information of the specified category in each time window within a specified time period.

If ten days are used as the specified time period, and the time window is measured in days, a window exposure amount and a window conversion rate of the reference information of the specified category for each day of the ten days are obtained, that is, ten window exposure amounts and ten window conversion rates are respectively obtained for each reference information.

The correction unit 72 of the reference information parameter obtaining module 61 corrects the window exposure amount and the window conversion rate of the reference information by using time information of the time window. A window conversion rate and a window exposure amount change when duration increases, and a window conversion rate and a window exposure amount for a more recent time are more accurate. Therefore, to accurately obtain the window exposure amount and the window conversion rate of the reference information, the window exposure amount and the window conversion rate of the reference information are corrected by using the time information of the time window, so as to obtain a corrected window exposure amount and a corrected window conversion rate of a time window corresponding to the reference information. The corrected window exposure amount is generally equal to a product of the window exposure amount and exposure amount correction weight, and the exposure amount correction weight corresponding to a window exposure amount closer to current time has a larger weight. The corrected window conversion rate is generally equal to a product of the window conversion rate and a conversion rate correction weight, and the conversion correction weight corresponding to a window exposure amount closer to current time has a larger weight.

The reference information parameter obtaining unit 73 of the reference information parameter obtaining module 61 adds up the corrected window exposure amount obtained by the correction unit 72 and for the time windows corresponding to the reference information, to obtain exposure amount of the reference information within the specified time period; and at the same time adds up the corrected window conversion rates obtained by the correction unit and for each time window corresponding to the reference information, to obtain the conversion rate of the reference information within the specified time period.

Further, the sorting module 62 sorts all the reference information according to the conversion rates of the reference information obtained by the reference information parameter obtaining module 61, for example, sorts all the reference information according to the conversion rates of the reference information in ascending order.

Further, the conversion rate obtaining module 63 obtains the conversion rate of the reference information at each position-value-point according to the exposure amount of the reference information obtained by the reference information parameter obtaining module 61 and a position-value-point setting rule. Herein, position-value-points are set in conversion rates of all the reference information according to exposure amounts. For example, a conversion rate of reference information at a position whose exposure amount is 0% of the total amount is used as a first position-value-point, a conversion rate of reference information at a position whose exposure amount is 10% of the total amount is used as a second position-value-point, ..., and a conversion rate of reference information at a position whose exposure amount is 100% of the total amount is used as an eleventh position-value-point, thereby dividing the conversion rates of all the reference information into ten categories, and at the same time obtaining conversion rates of reference information corresponding to the first position-value-point to the eleventh position-value-point.

Further, the position-value table creation module 64 creates a position-value table of the reference information of the specified category by using the conversion rates at each position-value-point obtained by the conversion rate obtaining module 63.

Further, the position-value table obtaining module 65 obtains position-value tables of reference information of different categories. The reference information herein may be advertisement information, promotion information, or the like. The reference information is divided into different categories because different feedback effects or feedback difficulties are required. For example, an advertisement that requires a user to click to view may be a viewing-type advertisement, an advertisement that requires a user to download an application is a download-type advertisement, and an advertisement that requires a user to click to follow may be a following-type advertisement. Standards governing whether conversion rates of the reference information of the different categories are normal are different.

The position-value table includes conversion rates of the reference information of a corresponding category at each position-value-point, where the position-value-point is generated according to exposure amount of all reference information of the category. For example, all reference information of the category is sorted according to values of conversion rates, and then is divided into ten equal parts according to total exposure amounts of all the reference information, where points whose total exposure amounts are 0%, 10%, 20%, ..., 90%, and 100% are position-value-points of the position-value table.

Further, the normalization processing module 66 obtains the multiple pieces of information-to-be-released, and then performs normalization processing on the conversion rates of the information-to-be-released according to the categories of the obtained information-to-be-released by using the position-value tables obtained by the position-value table obtaining module 65, that is, conversion rates of information-to-be-released of different categories are set by using a same standard, so as to obtain normalized conversion rates of the information-to-be-released of the different categories.

Optionally, the interval determining unit 81 of the normalization processing module 66 determines an interval of the conversion rate of the information-to-be-released in the corresponding position-value table. Conversion rates of all the information-to-be-released in the position-value table are sorted by value, and at the position-value-points in the position-value table, the conversion rates of all the information-to-be-released are divided into multiple intervals according to exposure amounts of the reference information. For example, a first interval includes conversion rates of all reference information whose exposure amount occupies 0% to 10% of a total exposure amount, a second interval includes conversion rates of all reference information whose exposure amount occupies 10% to 20% of the total exposure amount... In this way, the interval position of the conversion rate of information-to-be-released in the position-value table may be determined according to the position-value table. For example, the conversion rate of reference information within a first interval is 0.05 to 0.1, the conversion rate of reference information in a second interval is 0.1 to 0.13, and the conversion rate of reference information in a third interval is 0.13 to 0.2. If the conversion rate of information-to-be-released is 0.15, the conversion rate of the information-to-be-released is located within the third interval of the position-value table.

The position determining unit 82 of the normalization processing module 66 determines the position of the conversion rate of the information-to-be-released in the position-value table according to a start value of the interval obtained by the interval determining unit 81, and an end value of the interval, and the conversion rate of the information-to-be-released. If a conversion rate of information-to-be-released is located within the third interval of the position-value table, the interval start value of the interval is 0.13, and the interval end value of the interval is 0.2. If the conversion rate of information-to-be-released is 0.15, the position of the conversion rate of the information-to-be-released in the position-value table is A+(0.15-0.13)/(0.2-0.13)/B, where A is the start position of the third interval in all intervals, and B is the total number of the intervals. If the position-value table is evenly divided into ten intervals, the value of A is 0.2, and the value of B is 10. In this way, the position of the conversion rate of the information-to-be-released in the position-value table is 0.2+(0.15-0.13)/(0.2-0.13)/10=0.228.

The normalization processing unit 83 of the normalization processing module 66 determines a normalized conversion rate of the information-to-be-released according to the position of the conversion rate of the information-to-be-released in the position-value table, where the position is obtained by the position determining unit 82. If a maximum normalized conversion rate in the position-value table is 1, the normalized conversion rate of the information-to-be-released is 0.228.

Finally, the release module 67 selectively releases the multiple pieces of information-to-be-released according to the normalized conversion rates of the information-to-be-released of the different categories obtained by the normalization processing module 66. That is, under equal conditions, information-to-be-released whose normalized conversion rate is relatively high is first released, so as to increase accuracy of information release and release efficiency of the information release.

In this way, an information release process of the information release apparatus 60 in this embodiment is complete. Based on the foregoing embodiments, according to the information release apparatus in this embodiment, accuracy of advertisement information release is further increased by creating and using position-value tables and correction of exposure amount and conversion rates of reference information.

The following describes a specific working principle of the information release method and the information release apparatus of the present invention by using a specific embodiment. In this specific embodiment, the information release apparatus is an advertisement release server.

First, the advertisement release server sets a specified time period for calculating a normalized conversion rate. In this specific embodiment, the specified time period is ten days, and one day is used as a time window. In this way, ten window conversion rates $CVR_{tj}$ and ten window exposure amounts $IMP_{tj}$ of a reference advertisement are separately obtained, where j is the number of the reference advertisement, and t is the number of days from current time for a corresponding time window.

Then, the window exposure amounts and the window conversion rates within the specified time period are corrected by using the following formula, and corrected window exposure amounts and corrected window conversion rates within the specified time period are added up, so as to obtain a conversion rate and exposure amount of the reference advertisement within the specified time period.

$$\mathrm{ADCVR}^{j} = \sum_{t=1}^{N} f(\mathrm{t})\mathrm{CVR}_{t}^{j}$$

$$\mathrm{ADIMP}^{j} = \sum_{t=1}^{N} f(\mathrm{t})\mathrm{IMP}_{t}^{j}$$

$$f(\mathrm{t}) = 1 - t\big/N$$

$\mathrm{ADCVR}^{j}$ is a conversion rate of the reference advertisement whose number is j within the specified time period, and $\mathrm{ADIMP}^{j}$ is exposure amount of the reference advertisement whose number is j within the specified time period. N is the total number of days within the specified time period, and t is the number of days from current time for the corresponding time window.

Further, all reference advertisements are sorted according to the conversion rates of the reference advertisements in ascending order.

Further, position-value-points are set among conversion rates of all sorted reference advertisements according to the exposure amounts. In this specific embodiment, a conversion rate of a reference advertisement at a position whose exposure amount is 0% of a total exposure amount is used as a first position-value-point, a conversion rate of a reference advertisement at a position whose exposure amount is 10% of the total exposure amount is used as a second position-value-point, ..., and a conversion rate of a reference advertisement at a position whose exposure amount is 100% of the total exposure amount is used as an eleventh position-value-point. If there is no reference advertisement at the position whose exposure amount is 10% of the total exposure amount, for example, a sum of exposure amounts of first 19 reference advertisements is 9.5%, and a sum of exposure amounts of first 20 reference advertisements is 10.3%, a position of a conversion rate of a reference advertisement (a twentieth reference advertisement) closest to the position whose exposure amount is 10% of the total exposure amount is used as the second position-value-point.

In this way, by performing the foregoing operations on reference advertisements of various categories, position-value tables corresponding to the reference advertisements of the categories may be obtained, where a position-value table includes position-value-points used to indicate conversion rates of corresponding reference advertisements.

Further, the advertisement release server obtains multiple release advertisements, and performs normalization processing on conversion rates of the release advertisements according to categories of the release advertisements by using corresponding position-value tables. If an advertisement A is a download-type advertisement, a position-value table corresponding to the download-type advertisement is obtained. For example, the position-value table is:
[0.05, 0.1, 0.13, 0.2, 0.24, 0.3, 0.36, 0.45, 0.5, 0.6, 0.7]
That is, the conversion rate of a download-type advertisement whose exposure amount is 10% of a total exposure amount is 0.1, the conversion rate of a download-type advertisement whose exposure amount is 60% of a total exposure amount is 0.36, and the conversion rate of a download-type advertisement whose exposure amount is 70% of a total exposure amount is 0.45. For example, a conversion rate of a download-type advertisement is 0.4, and is within an interval of [0.36, 0.45], and therefore a normalized conversion rate of the download-type advertisement is 0.6+(0.4-0.36)/(0.45-0.36)/10=0.644.

If an advertisement B is a following-type advertisement, a position-value table corresponding to the following-type advertisement is obtained. For example, the position-value table is:
[0.07, 0.13, 0.17, 0.25, 0.3, 0.37, 0.44, 0.54, 0.7, 0.81]
That is, the conversion rate of a following-type advertisement whose exposure amount is 10% of a total exposure amount is 0.13, the conversion rate of a following-type advertisement whose exposure amount is 50% of a total exposure amount is 0.37, and the conversion rate of a following-type advertisement whose exposure amount is 60% of a total exposure amount is 0.44. For example, the conversion rate of a following-type advertisement is 0.4, and is within an interval of [0.36, 0.45], and therefore a normalized conversion rate of the following-type advertisement is 0.5+(0.4-0.37)/(0.44-0.37)/10=0.543.

Finally, the advertisement release server selectively releases the advertisement A and the advertisement B. The normalized conversion rate of the advertisement A is greater than the normalized conversion rate of the advertisement B, and therefore the release priority of the advertisement A is higher than the release priority of the advertisement B.

In this way, an information release process of the information release method and the information release apparatus in this specific embodiment is complete.

According to the information release method and the information release apparatus in the embodiments of the present invention, normalization processing is performed on information-to-be-released by using position-value tables of the reference information of different categories, and in each interval of a position-value table, data about the conversion rate of the reference information is evenly distributed by default. In this way, while ensuring calculation accuracy of a normalized conversion rate, calculation complexity of the normalized conversion rate can be reduced, so that accuracy of advertisement information release can be increased, resolving a technical problem that advertisement release accuracy of an existing information release method and information release apparatus is relatively low.

An embodiment of the present invention provides a computer storage medium. The computer storage medium stores computer executable instructions. The computer executable instructions are used to execute one or more of the foregoing information release methods, for example, one or more of the methods shown in FIG. 1, FIG. 2, FIG. 3, and FIG. 4. The computer storage medium may include various storage mediums such as a random access medium RAM, a read-only storage medium ROM, a flash memory, a USB disk, and a magnetic tape, and be optionally a non-transient storage medium.

Terms such as "component", "module", "system", "interface", and "process" used in this application are generally intended to refer to computer-related entities: hardware, combinations of hardware and software, software, or software being executed. For example, a component may be, but is not limited to, a process that runs on a processor, a processor, an object, an executable application, a thread of execution, a program, and/or a computer. As shown in the figure, both an application being run in a controller and the controller may be components. One or more components may reside within a process and/or a thread of execution, and a component may be located on one computer and/or distributed between two or more computers.

In addition, a subject requiring to be protected may be implemented as a method, an apparatus, or a product for using standard programming and/or engineering technologies to generate software, firmware, hardware, or any combination thereof to control a computer to implement the disclosed subject. The term "product" used in this document is intended to include a computer program that can be accessed from any computer-readable device, carrier or medium. Certainly, a person skilled in the art appreciates that many modifications may be performed on the configuration, without disobeying the scope or spirit of the subject requiring to be protected.

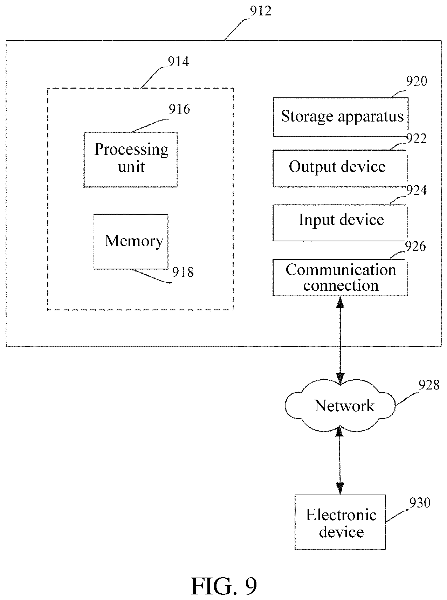

FIG. 9 and a subsequent description provide a brief outlined description about how to implement an operational environment of an electronic device in which the information release apparatus of the present invention is implemented. The operational environment in FIG. 9 is an example of a proper operational environment, and is not intended to suggest any limitation on the scope of the purpose or function of the working environment. An example of an electronic device 912 includes but is not limited to a personal computer, a server computer, a handheld or laptop device, a mobile device (such as a mobile phone, a personal digital assistant (PDA), or a media player), a multi-processor system, a consumption-type electronic device, a small computer, a large computer, a distributed computing environment that includes any of the foregoing systems or devices, or the like.

Although there is no requirement, the embodiment is described under the general background that a "computer readable instruction" is executed by one or more electronic devices. The computer readable instruction may be distributed by using a computer readable medium (described in the following). The computer readable instruction may be implemented as a program module, such as a function, an object, an application programming interface (API), or a data structure that performs a particular task or implements a particular abstract data type. Typically, functions of the computer readable instruction may be freely combined or distributed.

FIG. 9 shows an example of an electronic device 912 that includes one or more embodiments of the information release apparatus of the present invention. In a configuration, the electronic device 912 includes at least one processing unit 916 and a memory 918. According to an exact configuration and type of the electronic device, the memory 918 may be volatile (for example, a RAM), non-volatile (for example, a ROM or a flash memory), or a combination of the two. The configuration is shown in FIG. 9 by using a dashed line 914.

In another embodiment, the electronic device 912 may include additional characteristic and/or functions. For example, the device 912 may further include an additional storage apparatus (for example, a removable and/or an irremovable storage apparatus). The additional storage apparatus includes but is not limited to a magnetic storage apparatus, an optical storage apparatus, or the like. This additional storage apparatus is shown as a storage apparatus 920 in FIG. 9. In an embodiment, a computer readable instruction used to implement one or more embodiments provided in this document may be in the storage apparatus 920. The storage apparatus 920 may store another computer readable instruction used to implement an operating system, an application program, or the like. The computer readable instruction may be loaded into the memory 918 to be executed by, for example, the processing unit 916.

The term "computer readable medium" used in this document includes a computer storage medium. The computer storage medium includes volatile or nonvolatile, and removable or irremovable mediums that are implemented by using any method or technology used to store information such as a computer readable instruction or other data. The memory 918 and the storage apparatus 920 are examples of computer storage mediums. The computer storage medium includes but is not limited to a RAM, a ROM, an EEPROM, a flash memory or another memory technology, a CD-ROM, a digital versatile disc (DVD) or another optical storage apparatus, a cassette tape, a magnetic tape, a magnetic disk storage apparatus or another magnetic storage device, or any other medium that can be used to store expected information and can be accessed by the electronic device 912. Any such computer storage medium may be a portion of the electronic device 912.

The electronic device 912 may further include a communication connection 926 that allows the electronic device 912 to communicate with another device. The communication connection 926 may include but is not limited to a modem, a network interface card (NIC), an integrated network interface, a radio frequency transmitter/receiver, an infrared port, a USB connection, or another interface used to connect the electronic device 912 to another electronic device. The communication connection 926 may include a wired connection or a wireless connection. The communication connection 926 may transmit and/or receive communication media.

The term "computer readable medium" may include a communications medium. The communications medium typically includes a computer readable instruction or other data in a "modulated data signal" such as a carrier or another transmission mechanism, and includes any information transfer medium. The term "modulated data signal" may include such a signal: one or more features of the signal are set or changed in a manner of encoding information into the signal.

The electronic device 912 may include an input device 924, such as a keyboard, a mouse, a pen, a voice input device, a touch input device, an infrared camera, a video input device and/or any other input device. The device 912 may also include an output device 922, such as one or more displays, a speaker, a printer and/or any other output device. The input device 924 and the output device 922 may be connected to the electronic device 912 by using a wired connection, a wireless connection, or any combination of the wired connection and the wireless connection. In an embodiment, an input device or an output device from another electronic device may be used as the input device 924 or the output device 922 of the electronic device 912.

Components of the electronic device 912 may be connected by using various interconnections (such as a bus). The interconnections may include a peripheral component interconnection (PCI) (such as a fast PCI), a universal serial bus (USB), a live wire (IEEE 1394), an optical bus structure, and the like. In another embodiment, components of the electronic device 912 may be interconnected by using a network. For example, the memory 918 may include multiple physical memory units that are located at different physical positions and interconnected by using a network.

A person skilled in the art will learn that, a storage device used to store a computer readable instruction may be distributed across networks. For example, an electronic device 930 accessible by using a network 928 may store a computer readable instruction used to implement one or more embodiments provided by the present invention. The electronic device 912 may access the electronic device 930 and download a portion of or all of the computer readable instruction for execution. Alternatively, the electronic device 912 may download multiple computer readable instructions as required, or some instructions may be executed in the electronic device 912 and some instructions may be executed in the electronic device 930.

This document provides various operations of the embodiments. In an embodiment, the one or more operations may form one or more computer readable instructions stored in a computer readable medium, and when the instructions are executed by the electronic device, a calculation device performs the operations. A sequence in which some or all operations are described should not be construed as an implication that these operations need to be sequence-related. The person skilled in the art understands an alternative sequence that has benefits of the specification. In addition, it should be understood that, all operations do not need to exist in each embodiment provided in this document.

The term "or" used in this application is intended to refer to inclusive "or" but not exclusive "or". That is, unless otherwise specified or clear in the context, "X uses A or B" means any one naturally included in an arrangement. That is, if X uses A, X uses B, or X uses both A and B, "X uses A or B" is satisfied in any one of the foregoing examples.

In addition, although this disclosure has been shown and described relative to one or more implementations, the person skilled in the art thinks of equivalent variations and modifications based on reading and understanding of the specification and the accompanying drawings. This disclosure includes all the modifications and variations, and is limited only by the scope of the claims. Especially, for various functions performed by the foregoing component (such as an element or a resource), a term used to describe the components is intended to correspond to any component (unless otherwise indicated) that performs a specified function of the component (for example, they have equivalent functions), even if a structure of the component is not the same as a disclosed structure that performs the functions in the exemplary implementations shown in this document. In addition, although a particular characteristic of this disclosure is disclosed relative to only one of the several implementations, this characteristic may be combined with one or more other characteristics of another implementation that is expected or beneficial for a given or a particular application. In addition, if terms "include", "have", "contain", or a variation thereof is used in a specific implementation or the claims, the terms are intended to include in a manner similar to a manner of the term "include".

Functional units in the embodiments of the present invention may be integrated into one processing module, or each of the units may exist alone physically, or two or more units are integrated into one module. The integrated modules may be implemented in a form of hardware, or may be implemented in a form of a software functional module. When the integrated module is implemented in a form of a software functional module and sold or used as an independent product, the integrated module may alternatively be stored in a computer-readable storage medium. The foregoing storage medium may be a read-only memory, a magnetic disk, or an optical disc, and the like. The foregoing apparatuses or systems may execute the methods in corresponding method embodiments. The processing module may correspond to a processor or a processing circuit. The processor may include a central processing unit, a micro-processor, a digital signal processor, an application processor, or a programmable array, and the processing circuit may be an application-specific integrated circuit.

In summary, although the present invention is disclosed as above by using the embodiments, the embodiments are not used to limit the present invention. Any modification made according to the principle of the present invention should be understood as falling within the protection scope of the present invention.

**Claims**

1. An information release method, comprising:

obtaining position-value tables of reference information of different categories, wherein a position-value table comprises conversion rates of the reference information of a corresponding category at each position-value-point, wherein the position-value-point is generated according to exposure amount of all reference information of the category;
obtaining multiple pieces of information-to-be-released, and performing normalization processing on conversion rates of the multiple pieces of information-to-be-released according to categories of the multiple pieces of information-to-be-released by using corresponding position-value tables, so as to obtain normalized conversion rates of the multiple pieces of information-to-be-released; and
selectively releasing the multiple pieces of information-to-be-released according to the normalized conversion rates of the multiple pieces of information-to-be-released.

2. The information release method according to claim 1, wherein the obtaining position-value tables of reference information of different categories further comprises:

obtaining exposure amount and conversion rates of all reference information of a specified category;
sorting all the reference information of the specified category according to the conversion rates of all the reference information of the specified category;
obtaining conversion rates of reference information at each position-value-point according to the exposure amount of the reference information and a position-value-point setting rule; and
creating a position-value table of all reference information of the specified category by using the conversion rates of the reference information at each position-value-point.

3. The information release method according to claim 2, wherein the obtaining exposure amount and conversion rates of all reference information of a specified category comprises:

obtaining window exposure amount and window conversion rates of all reference information of the specified category in each time window within a specified time period;
correcting the window exposure amount and the window conversion rates of all reference information of the specified category by using time information of the time window, so as to obtain corrected window exposure amount and a corrected window conversion rate for the time window; and
adding up the corrected window exposure amount for each time window corresponding to all reference information, so as to obtain exposure amount of the reference information within the specified time period; and adding up the corrected window conversion rate for each time window to obtain a conversion rate of the reference information within the specified time period.

4. The information release method according to claim 1, wherein the performing normalization processing on conversion rates of the multiple pieces of information-to-be-released according to categories of the multiple pieces of information-to-be-released by using corresponding position-value tables, so as to obtain normalized conversion rates of the multiple pieces of information-to-be-released comprises:

determining intervals of the conversion rates of the multiple pieces of information-to-be-released based on the position-value tables;
determining positions of the conversion rates of the multiple pieces of information-to-be-released in the position-value tables, each position being determined according to a start value of the interval, and an end value of the interval, and the conversion rate of the information-to-be-released; and
determining the normalized conversion rates of the multiple pieces of information-to-be-released according to the positions of the conversion rates of the multiple pieces of information-to-be-released in the position-value tables.

5. The information release method according to claim 1, wherein, for selectively releasing the multiple pieces of information-to-be-released according to the normalized conversion rates of the multiple pieces of information-to-be-released comprises:
releasing the release information-to-be-released whose normalized conversion rate is greater than or equal to a specified value.

6. An information release apparatus, comprising:

   a position value table obtaining module, configured to obtain position-value tables of reference information of different categories, wherein a position value table comprises conversion rates of the reference information of a corresponding category at each position-value-point, wherein the position-value-point is generated according to exposure amount of all reference information of the category;
   a normalization processing module, configured to: obtain multiple pieces of information-to-be-released, and perform normalization processing on conversion rates of the multiple pieces of information-to-be-released according to categories of the multiple pieces of information-to-be-released by using corresponding position-value tables, so as to obtain normalized conversion rates of the multiple pieces of information-to-be-released; and
   a release module, configured to selectively release the multiple pieces of information-to-be-released according to the normalized conversion rates of the multiple pieces of information-to-be-released.

7. The information release apparatus according to claim 6, wherein the information release apparatus further comprises:

   a reference information parameter obtaining module, configured to obtain exposure amount and conversion rates of all reference information of a specified category;
   a sorting module, configured to sort all the reference information of the specified category according to the conversion rates of all the reference information of the specified category;
   a conversion rate obtaining module, configured to obtain conversion rates of reference information at each position-value-point according to the exposure amount of the reference information and a position-value-point setting rule; and
   a position value table creation module, configured to a position-value table of all reference information of the specified category by using the conversion rates of the reference information at each position-value-point.

8. The information release apparatus according to claim 7, wherein the reference information parameter obtaining module comprises:

   a window parameter obtaining unit, configured to obtain window exposure amount and window conversion rates of all reference information of the specified category in each time window within a specified time period;
   a correction unit, configured to correct the window exposure amount and the window conversion rates of all reference information of the specified category by using time information of the time window, so as to obtain corrected window exposure amount and a corrected window conversion rate for the time window; and
   a reference information parameter obtaining unit, configured to: add up the corrected window exposure amount for each time window corresponding to all reference information, so as to obtain exposure amount of the reference information within the specified time period; and adding up the corrected window conversion rate for each time window to obtain a conversion rate of the reference information within the specified time period.

9. The information release apparatus according to claim 6, wherein the normalization processing module comprises:

   an interval determining unit, configured to determine intervals of the conversion rates of the multiple pieces of information-to-be-released based on the position-value tables;
   a position determining unit, configured to determine positions of the conversion rates of the multiple pieces of information-to-be-released in the position-value tables, each position being determined according to a start value of the interval, and an end value of the interval, and the conversion rate of the information-to-be-released; and
   a normalization processing unit, configured to determine the normalized conversion rates of the multiple pieces of information-to-be-released according to the positions of the conversion rates of the multiple pieces of information-to-be-released in the position-value tables.

10. The information release apparatus according to claim 6, wherein the release module is configured to release the release information-to-be-released whose normalized conversion rate is greater than or equal to a specified value.

11. A computer storage medium, wherein the computer storage medium stores a computer executable instruction, and the computer executable instruction is used to execute one or more of the information release methods in claims 1 to 5.

Obtain position-value tables of reference information of different categories — S101

Obtain multiple pieces of information-to-be-released, and perform normalization processing on conversion rates of the multiple pieces of information-to-be-released according to categories of the multiple pieces of information-to-be-released by using corresponding position-value tables, so as to obtain normalized conversion rates of the multiple pieces of information-to-be-released — S102

Selectively release the multiple pieces of information-to-be-released according to the normalized conversion rates of the multiple pieces of information-to-be-released — S103

FIG. 1

```
┌─────────────────────────────────────────┐
│ Obtain exposure amount and conversion    │
│ rates of all                             │──── S201
│ reference information of a specified      │
│ category                                 │
└─────────────────────────────────────────┘
                    │
                    ▼
┌─────────────────────────────────────────┐
│ Sort all the reference information of the│
│ specified                                │──── S202
│ category according to the conversion     │
│ rates of all the                         │
│ reference information of the specified    │
│ category                                 │
└─────────────────────────────────────────┘
                    │
                    ▼
┌─────────────────────────────────────────┐
│ Obtain the conversion rates of the       │
│ reference                                │
│ information at each position-value-point │──── S203
│ according to                             │
│ the exposure amount of the reference     │
│ information and                          │
│ a position-value-point setting rule      │
└─────────────────────────────────────────┘
                    │
                    ▼
┌─────────────────────────────────────────┐
│ Create a position-value table of the     │
│ reference                                │
│ information of the specified category by  │──── S204
│ using the                                │
│ conversion rates of the reference        │
│ information at each                       │
│ position-value-point                     │
└─────────────────────────────────────────┘
                    │
                    ▼
┌─────────────────────────────────────────┐
│ Obtain position-value tables of reference│
│ information                              │──── S205
│ of different categories                  │
└─────────────────────────────────────────┘
                    │
                    ▼
┌─────────────────────────────────────────┐
│ Obtain multiple pieces of                │
│ information-to-be-released                │
│ and, based on the categories of the      │
│ multiple pieces of                        │
│ information-to-be-released, performing    │
│ normalization                            │──── S206
│ processing on the conversion rates of the │
│ multiple                                 │
│ pieces of information-to-be-released to   │
│ obtain                                   │
│ normalized conversion rates of the        │
│ multiple pieces of                        │
│ information-to-be-released               │
└─────────────────────────────────────────┘
                    │
                    ▼
┌─────────────────────────────────────────┐
│ Selectively release the multiple pieces  │
│ of information-                          │──── S207
│ to-be-released according to the normalized│
│ conversion                               │
│ rates of the multiple pieces of          │
│ information-to-be-                        │
│ released                                 │
└─────────────────────────────────────────┘
```

FIG. 2

Obtain a window exposure amount and a window conversion rate of the reference information of the specified category in each time window within a specified time period — S301

Correct the window exposure amount and the window conversion rate of all reference information of the specified category by using time information of the time window, so as to obtain corrected window exposure amount and a corrected window conversion rate for the time window — S302

Add up the corrected window exposure amount for each time window corresponding to all reference information, so as to obtain exposure amount of the reference information within the specified time period; and add up the corrected window conversion rate for each time window to obtain a conversion rate of the reference information within the specified time period — S303

## FIG. 3

Determine intervals of the conversion rates of the information-to-be-released — S401

Determine the position of the conversion rate of the information-to-be-released in the position-value table according to the start value of the interval, and the end value of the interval, and the conversion rate of the information-to-be-released — S402

Determine a normalized conversion rate of the information-to-be-released according to the position of the conversion rate of the information-to-be-released in the position-value table — S403

## FIG. 4

FIG. 5

FIG. 6

FIG. 7

66

Normalization
processing module

Interval determining
unit — 81

Position determining
unit — 82

Normalization
processing unit — 83

FIG. 8

FIG. 9

# INTERNATIONAL SEARCH REPORT

| International application No. |
| --- |
| **PCT/CN2017/070679** |

## A. CLASSIFICATION OF SUBJECT MATTER

G06Q 30/02 (2012.01) i

According to International Patent Classification (IPC) or to both national classification and IPC

## B. FIELDS SEARCHED

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, EPODOC, WPI, IEEE, CNKI, GOOGLE: conversion rate, transfer, rate, normalization, kind, group, category, type, table, range

## C. DOCUMENTS CONSIDERED TO BE RELEVANT

| Category* | Citation of document, with indication, where appropriate, of the relevant passages | Relevant to claim No. |
| --- | --- | --- |
| PX | CN 105678583 A (TENCENT TECHNOLOGY SHENZHEN CO., LTD.), 15 June 2016 (15.06.2016), claims 1-10, and description, paragraph 0132 | 1-11 |
| A | CN 105574216 A (DAERGUAN INFORMATION TECHNOLOGY (SHANGHAI) CO., LTD.), 11 May 2016 (11.05.2016), description, paragraphs 0075-0170, and figures 1-5 | 1-11 |
| A | CN 102880688 A (BEIJING BAIDU NETCOM SCIENCE AND TECHNOLOGY CO., LTD.), 16 January 2013 (16.01.2013), the whole document | 1-11 |
| A | JP 2013161359 A (YAHOO K.K.), 19 August 2013 (19.08.2013), the whole document | 1-11 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 March 2017 (01.03.2017) | **01 April 2017 (01.04.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**WANG, Ping**<br><br>Telephone No.: (86-10) **62413666** |
| --- | --- |

Form PCT/ISA/210 (second sheet) (July 2009)

## INTERNATIONAL SEARCH REPORT
Information on patent family members

International application No.

**PCT/CN2017/070679**

| Patent Documents referred in the Report | Publication Date | Patent Family | Publication Date |
|---|---|---|---|
| CN 105678583 A | 15 June 2016 | None | |
| CN 105574216 A | 11 May 2016 | None | |
| CN 102880688 A | 16 January 2013 | None | |
| JP 2013161359 A | 19 August 2013 | None | |

Form PCT/ISA/210 (patent family annex) (July 2009)

**EP 3 401 867 A1**

**Patent documents cited in the description**

- CN 201610009656